# EUROPEAN PATENT APPLICATION

(11) **EP 2 278 585 A1**
(43) Date of publication of application: **26.01.2011**
(21) Application number: 09746423.4
(22) Date of filing: 09.03.2009
(51) Int. Cl.: G11B 7/26

(54) **OPTICAL DISC RECORDING MEDIUM MANUFACTURING METHOD**

(30) Priority: 12.05.2008 JP 2008125190
(71) Applicant: Sony Corporation, Tokyo 108-0075 (JP)
(72) Inventor: OHOSHI, Toshio, Tokyo 1080075 (JP); NAKANO, Jun, Tokyo 1080075 (JP); AKIYAMA, Shoji, Tokyo 1080075 (JP); TANUPRAYOGI, Reynard, Tokyo 1080075 (JP)
(74) Representative: Körber, Martin Hans
(86) International application number: PCT/JP2009/054459
(87) International publication number: WO 2009/139216

(57) **Abstract**

Provided is a method of producing an optical disc recording medium with which an inexpensive optical disc recording medium can be produced.

For this purpose, the method of producing an optical disc recording medium of the present invention includes the steps of preparing a transfer substrate; forming an ultraviolet-curable resin layer on a surface of the transfer substrate; forming a projection-and-recess pattern on the ultraviolet-curable resin layer by pressing a nickel stamper having a desired projection-and-recess pattern onto the ultraviolet-curable resin layer under pressure while performing ultraviolet irradiation from the reverse surface side of the transfer substrate, and forming a recording layer on the ultraviolet-curable resin layer on which the projection-and-recess pattern is formed, wherein recording layers are formed in descending order of the light transmittance.

## Description

### Technical Field

The present invention relates to a method of producing an optical disc recording medium with which, as an optical disc recording medium, in particular, an optical disc recording medium including a plurality of recording layers on which information is recorded by using pits is inexpensively produced.

### Background Art

Recently, with the spread of personal computers, the initiation and the spread of terrestrial digital broadcasting, and acceleration of the spread of Hi-Vision televisions to ordinary households, it has been desired that an optical disc recording medium, which is one of optical information recording systems, can record a larger amount of information. Therefore, an increase in the recording density of an optical disc recording medium has been desired.
An optical disc recording medium is constituted by forming on a substrate a recording layer in which, for example, a recording film, a dielectric layer etc. are stacked. In addition, reading of an information signal from an optical disc recording medium or writing of an information signal to an optical disc recording medium is performed by irradiating the recording layer including the recording film with a laser beam.

An increase in the recording density of optical disc recording media can be performed by decreasing a light spot diameter focused on a recording film. The light spot diameter is restricted by the wavelength (λ) of a light source and a numerical aperture (NA) of an objective lens, and is in proportion to λ/2NA.

In order to achieve an increase in the recording density of optical disc recording media, it is necessary to reduce the wavelength of a laser beam to be radiated and to increase the NA of the objective lens. As for the wavelength, the wavelength has been reduced from 830 nm for a CD, which is an optical disc recording medium of the first generation, to 650 nm for a DVD (Digital Versatile Disc). Also, as for the NA, an increase in the NA has been achieved from about 0.45 for a CD, which is an optical disc recording medium of the first generation, to 0.60 for a DVD.

Furthermore, recently, an optical disc system in which a blue laser having a wavelength of 405 nm is used as a light source and the NA is increased to 0.85 (Blu-ray Disk: registered trademark, hereinafter, BD) has been practically used.

This BD is an optical disc recording medium in which a technique of increasing the recording density by decreasing the light spot diameter, and a technique of forming multiple recording layers, which is a technique for further increasing the density, are employed.
The BD serving as an optical disc recording medium having a large capacity is constituted by, for example, stacking a metal thin film, a dielectric film etc. on projections and recesses provided on a substrate having a thickness of 1.1 mm and providing a protective layer having a thickness of about 0.1 mm.

A method of producing an optical disc recording medium having multiple recording layers and known as the BD is described in, for example, Patent Document 1 below, but is performed as follows in general.

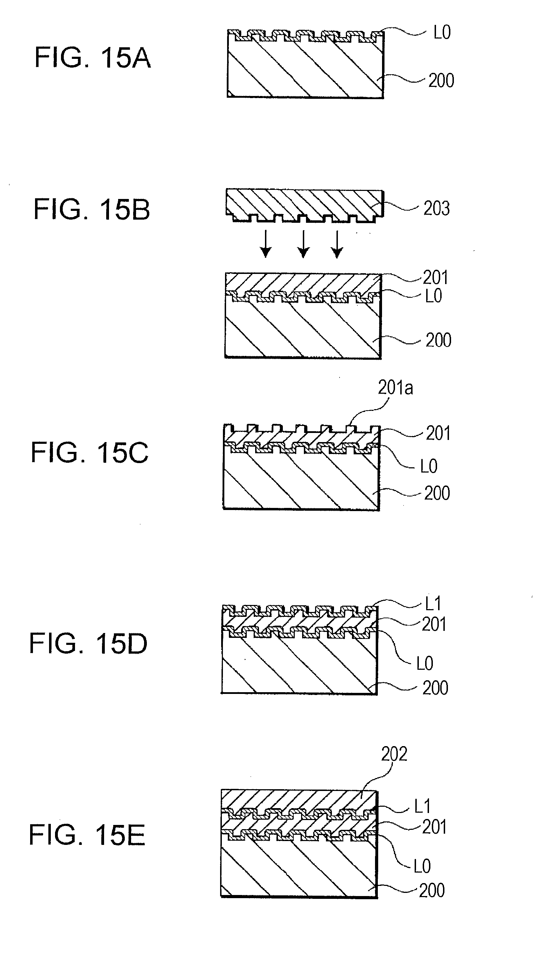

As an example, a method of producing an optical disc recording medium including two recording layers will be described with reference to Fig. 15.
First, as shown in Fig. 15A, a metal thin film, a thin-film material which can be used to perform thermal recording, and other films are formed on a formation resin substrate 200 having a thickness of about 1.1 mm and having a projection-and-recess pattern on a surface thereof, the projection-and-recess pattern functioning as pits and pregrooves, to form a first recording layer L0.
Next, as shown in Fig. 15B, a spacer layer 201 that separates adjacent recording layers and that has a thickness in the range of several micrometers to several tens of micrometers is formed on the first recording layer L0 provided on the formation resin substrate 200. This spacer layer 201 is composed of, for example, an ultraviolet curable resin. Subsequently, a transparent stamper 203 having a projection-and-recess pattern of pits, pregrooves etc. on a surface thereof is pressed onto the spacer layer 201. The spacer layer 201 is cured by being irradiated with ultraviolet light from the upper surface of the transparent stamper 203. Accordingly, as shown in Fig. 15C, a projection-and-recess pattern 201a of pits and pregrooves is transferred onto the spacer layer 201.
Subsequently, as shown in Fig. 15D, a metal thin film having a predetermined transmittance for the wavelength of a laser beam used for recording and/or reproduction or a thin-film material which can be used to perform thermal recording is formed on the projection-and-recess pattern 201a of pits and pregrooves transferred on the spacer layer 201 to form a second recording layer L1.
Furthermore, lastly, as shown in Fig. 15E, a protective layer 202 that protects the second recording layer L1 is formed on the second recording layer L1.

The optical disc recording medium including two recording layers is formed by the steps described above.
In the case where a multilayer structure is achieved by forming two or more recording layers, as described in, for example, Patent Document 2 below, such a multilayer structure can be formed by repeating the above-described steps of forming the second recording layer several times to sequentially stack a plurality of recording layers in consideration of interlayer cross-talk during recording and/or reproduction of a signal.

For such a multilayer optical disc recording medium constituted as described above, in order to reduce an effect of signal degradation due to an inclination of the disc, it is desired that the stacked recording layers be formed within a range of 0.1 mm. Furthermore, in the optical disc recording medium having two recording layers, the first recording layer L0 and the second recording layer L1 are formed with the spacer having a thickness in the range of several microns to several tens of microns therebetween, and the light-transmissive protective layer 202 is provided thereon.

In addition, it is desired that the optical disc recording medium having multiple recording layers can perform uniform recording and reading from the innermost circumference to the outermost circumference of the formation resin substrate 200. Therefore, uniform optical properties and a uniform physical shape of the spacer layer 201 set between the first recording layer L0 and the second recording layer L1 are required. At the same time, a method of producing an inexpensive optical disc recording medium has been desired.

Furthermore, as for such optical disc recording media, an application to a long-term storage is one of the important purposes of use thereof, and thus it is desired that recorded information be maintained for a long period of time. Therefore, a multilayer structure in which good recording characteristics can be maintained even in a high-temperature, high-humidity environment or in a low-temperature environment is desired.

### Prior Art Documents

Patent Document 1: Japanese Unexamined Patent Application Publication No. 2003-22586
Patent Document 2: Japanese Unexamined Patent Application Publication No. 2007-257759

### Disclosure of Invention

### Technical Problem

Meanwhile, the above-described transparent stamper 203 (Fig. 15B) having a projection-and-recess pattern of pits, pregrooves etc. on a surface thereof, which is used in the conventional method of producing an optical disc recording medium including two recording layers is composed of a transparent resin in many cases. For an optical disc recording medium including two recording layers, one transparent stamper is used. For an optical disc recording medium in which recording layers, the number of which is n, are formed, (n - 1) transparent stampers are used. In addition, these transparent stampers cannot be reused. Therefore, in the conventional stamper process, the cost is increased. Consequently, in producing an inexpensive optical disc recording medium, an improvement of the stamper process has been desired.

In view of the above-described point, it is an object of the present invention to provide a method of producing an optical disc recording medium with which an inexpensive optical disc recording medium can be produced.

### Technical Solution

In order to solve the above problem and to achieve the object of the present invention, in a method of producing an optical disc recording medium of the present invention, a transfer substrate is prepared, and an ultraviolet-curable resin layer is formed on the transfer substrate. Subsequently, a projection-and-recess pattern is formed on the ultraviolet-curable resin layer by pressing a nickel stamper having a desired projection-and-recess pattern onto the ultraviolet-curable resin layer under pressure while performing ultraviolet irradiation from the transfer substrate side. Subsequently, a recording layer is formed on the ultraviolet-curable resin layer on which the projection-and-recess pattern is formed.
Furthermore, an ultraviolet-curable resin layer is formed on the recording layer formed in the previous step, and the nickel stamper having the desired projection-and-recess pattern is then pressed onto the ultraviolet-curable resin layer under pressure. At the same time, ultraviolet irradiation is performed from the transfer substrate side. Thus, a projection-and-recess pattern is formed on the ultraviolet-curable resin layer. Subsequently, another recording layer is formed on the ultraviolet-curable resin layer on which the projection-and-recess patter is formed, the other recording layer having a light transmittance lower than the light transmittance of the recording layer formed in the previous step.
Furthermore, by repeating the step of forming another recording layer a plurality of times according to need, recording layers each having a light transmittance lower than the light transmittance of the recording layer formed in the previous step are sequentially formed.
In addition, a formation substrate is prepared, and stacked films including the plurality of recording layers and formed on the transfer substrate are transferred to the formation substrate. A hard coating layer that covers the stacked films is formed on the formation substrate on which the stacked films are transferred. The optical disc recording medium of the present invention is produced by these steps.

In the method of producing an optical disc recording medium of the present invention, a plurality of recording layers are formed on a transfer substrate in descending order of the light transmittance. Accordingly, even when irradiation of ultraviolet light is performed from the reverse surface side of the transfer substrate, an ultraviolet-curable resin layer can be efficiently cured. Furthermore, since a nickel stamper is used, the stamper can be used repeatedly in a stamper process.

### Advantageous Effects

According to the present invention, an optical disc recording medium including multiple recording layers can be cured with ultraviolet light from the high-transmittance side of the structure thereof. Therefore, the freedom of the design of the recording layers is large, and the optical disc recording medium can be inexpensively produced with good process consistency.

### Brief Description of Drawings

[Fig. 1] Fig. 1 is a schematic cross-sectional structural view (part 1) of a relevant part of an optical disc recording medium formed in a first embodiment and a second embodiment of the present invention.
[Fig. 2] Fig. 2 is a schematic cross-sectional structural view (part 2) of the relevant part of the optical disc recording medium formed in the first embodiment and the second embodiment of the present invention.
[Fig. 3] A, B, and C are production process views (part 1) of the optical disc recording medium according to the first embodiment of the present invention.
[Fig. 4] D, E, and F are production process views (part 2) of the optical disc recording medium according to the first embodiment of the present invention.
[Fig. 5] G, H, and I are production process views (part 3) of the optical disc recording medium according to the first embodiment of the present invention.
[Fig. 6] J, K, and L are production process views (part 4) of the optical disc recording medium according to the first embodiment of the present invention.
[Fig. 7] M is a production process view (part 5) of the optical disc recording medium according to the first embodiment of the present invention.
[Fig. 8] N is a production process view (part 6) of the optical disc recording medium according to the first embodiment of the present invention.
[Fig. 9] O, P, and Q are production process views (part 7) of the optical disc recording medium according to the first embodiment of the present invention.
[Fig. 10] R, S, and T are production process views (part 8) of the optical disc recording medium according to the first embodiment of the present invention.
[Fig. 11] Fig. 11 is a schematic plan structural view of a pressing blade used in a first embodiment example of the present invention.
[Fig. 12] Fig. 12 is a cross-sectional structural view taken along line A-A of the pressing blade shown in Fig. 11.
[Fig. 13] A is a schematic plan structural view showing a typical standard of a BD, and B is a cross-sectional structural view taken along line A-A of the schematic plan structural view.
[Fig. 14] A and B are production process views of an optical disc recording medium according to a second embodiment of the present invention.
[Fig. 15] A to E are schematic production process views of an optical disc recording medium in a conventional example. Best Modes for Carrying Out the Invention

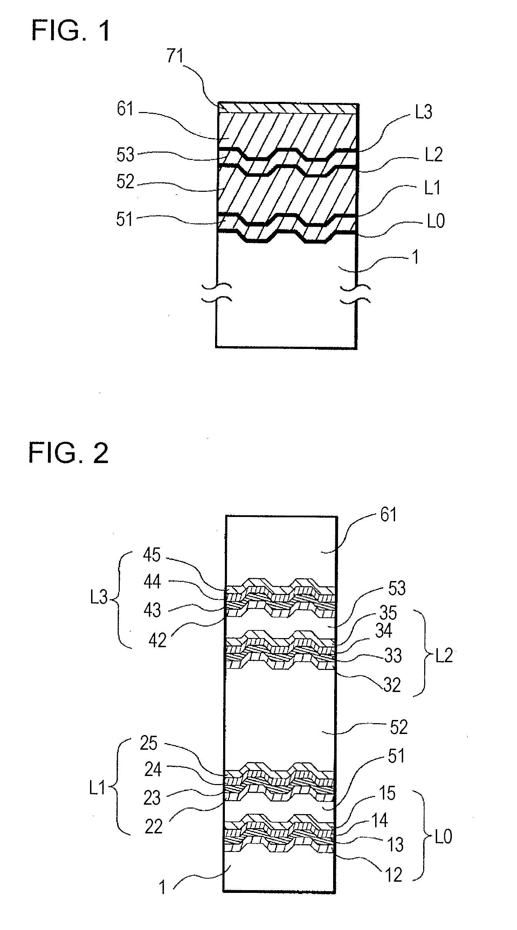

Each embodiment of the present invention will be described with reference to Figs. 1 to 14 below.

### [First Embodiment]

Fig. 1 shows a schematic cross-sectional structure of a relevant part of an optical disc recording medium formed in a first embodiment of the present invention. The optical disc recording medium formed in this embodiment is an optical disc recording medium including four recording layers. Fig. 1 shows a part of a cross section of the optical disc recording medium in which the four recording layers are provided on a disc-shaped formation resin substrate 1 having a thickness of 1.1 mm and an outer diameter of about 120 mm.

The structure thereof will be described with reference to Fig. 1.
The optical disc recording medium of this embodiment example is formed by sequentially stacking a first recording layer L0, a spacer layer 51, a second recording layer L1, a spacer layer 52, a third recording layer L2, a spacer layer 53, a fourth recording layer L3, a cover layer 61, and a hard coating layer 71 on a formation substrate composed of a resin (hereinafter, formation resin substrate) 1 having a thickness of 1.1 mm.

Furthermore, Fig. 2 illustrates the cross-sectional structure of the optical disc recording medium shown in Fig. 1 in more detail.
The first recording layer L0 is constituted by stacking, from the formation resin substrate 1 side, a reflective film 12, a first dielectric film 13, a recording film 14, and a second dielectric film 15.
The second recording layer L1 is constituted by stacking, from the formation resin substrate 1 side, a reflective film 22, a first dielectric film 23, a recording film 24, and a second dielectric film 25.
The third recording layer L2 is constituted by stacking, from the formation resin substrate 1 side, a reflective film 32, a first dielectric film 33, a recording film 34, and a second dielectric film 35.
The fourth recording layer L3 is constituted by stacking, from the formation resin substrate 1 side, a reflective film 42, a first dielectric film 43, a recording film 44, and a second dielectric film 45.

Here, the recording films 14, 24, 34, and 44 are recording films composed of a write-once phase-change material and are designed so that the strengths of signal output from the respective layers during reading are equivalent to each other.
That is, the relationship of the magnitude of the light transmittance of the first recording layer L0 to the fourth recording layer L3 in the optical disc recording medium of this embodiment example is L0 < L1 < L2 < L3.

The thickness of each of the first and second dielectric films 13, 15, 23, 25, 33, 35, 43, and 45 used in the first recording layer L0 to the fourth recording layer L3, respectively, is preferably in the range of 3 nm to 100 nm and is determined in consideration of optical properties and thermal properties.

As a material of each of the first and second dielectric films 13, 15, 23, 25, 33, 35, 43, and 45, a material having a low absorptivity at the wavelength of laser used for recording and/or reproduction is preferable. Specifically, a material having a value of extinction coefficient K of 0.2 or less is preferable. Examples of such a material include 2nS-SiO₂ mixtures (preferably, in a molar ratio of 4:1). Besides ZnS-SiO₂ mixtures, known materials that have been used as materials of dielectric films of optical disc recording media can also be used.

Examples of the material of each of the first and second dielectric films 13, 15, 23, 25, 33, 35, 43, and 45 that can be used include nitrides, oxides, carbides, fluorides, sulfides, nitroxides, nitrocarbides, and oxycarbides of an element of a metal, semimetal, or the like such as Al, Si, Ta, Ti, Zr, Nb, Mg, B, Zn, Pb, Ca, La, or Ge; and materials containing any of these as a main component. Preferably, AlNₓ (0.5 ≤ X ≤ 1), AlN, Al₂O_{2-X} (0 ≤ X ≤ 1), Al₂O₃, Si₃N₄₋ₓ (0 ≤ X ≤ 1), Si₃N₄₋ₓ. SiOₓ (1 ≤ X ≤ 2), SiO₂, SiO, MgO, Y₂O₃, MgAl₂O₄, TiOₓ (1 ≤ X ≤ 2), TiO₂, BaTiO₃, StTiO₄, Ta₂O₅₋ₓ ( 0 ≤ X ≤ 1), Ta₂O₅, GeOₓ (1 ≤ X ≤ 2) , SiC, ZnS, PbS, Ge-N, Ge-N-O, Si-N-O, CaF₂, LaF, MgF₂, NaF, ThF₄, or the like can be used.

The thickness of each of the recording films 14, 24, 34, and 44 used in the first recording layer L0 to the fourth recording layer L3, respectively, is preferably in the range of 5 nm to 30 nm, and, for example, about 15 nm. As a material of each of the recording films 14, 24, 34, and 44, a phase-change material that causes an irreversible state change by irradiation of a laser beam can be used. As such a material, for example, a chalcogen compound, an elemental chalcogen, or the like can be used. As the chalcogen compound, for example, a eutectic material of Sb and Te can be used. Preferably, a eutectic material of Sb and Te to which an additional element such as Ge is added can be used.

Examples thereof include materials containing Ge-Sb-Te, Sb-Te, In-Sb-Te, Ag-In-Sb-Te, Au-In-Sb-Te, Ge-Sb-Te-Pd, Ge-Sb-Te-Se, Ge-Sb-Te-Bi, Ge-Sb-Te-Co, or Ge-Sb-Te-Au; and materials in which a gas additive such as nitrogen or oxygen is introduced to these materials.

When an additional element is added to the recording films 14, 24, 34, and 44, properties such as reliability can be improved, whereas signal characteristics may degrade. Considering this point, the amount of additional element in the recording films 14, 24, 34, and 44 is preferably 10 atomic percent or less.

The thickness of each of the reflective films 12, 22, 32, and 42 used in the first recording layer L0 to the fourth recording layer L3, respectively, is preferably 3 nm or more, and more preferably, in the range of 5 nm to 60 nm.

As a material of each of the reflective films 12, 22, 32, and 42, for example, a metal or a semimetal can be used. The material of each of the reflective films 12, 22, 32, and 42 is preferably selected in consideration of a reflective power and the thermal conductivity. Examples thereof include metal and semimetal elements having a reflective power at the wavelength of a laser beam for recording and/or reproduction and having a thermal conductivity in the range of 0.0004 [J/(cm·K·s)] to 4.5 [J/(cm·K·s)], and compounds and mixtures thereof.

Specific examples of the material of each of the reflective films 12, 22, 32, and 42 include elements such as Al, Ag, Au, Ni, Cr, Ti, Pd, Co, Si, Ta, W, Mo, and Ge; and alloys containing any of these as a main component. Among these, in particular, Al-based materials, Ag-based materials, Au-based materials, Si-based materials, and Ge-based materials are preferable in terms of practical utility. As the alloys, for example, Al-Ti, Al-Cr, Al-Cu, Al-Mg-Si, Ag-Pd-Cu, Ag-PdTi, Si-B etc. are suitably used.

The material is preferably determined from these materials in consideration of optical properties and thermal properties. For example, considering the point that the material has a high reflectivity even in a short-wavelength region, an Al-based or Ag-based material is preferably used. In general, when the thickness of each of the reflective films 12, 22, 32, and 42 is determined to be a thickness through which light is not transmitted, for example, 50 nm or more, the reflectivity can be increased and heat can be readily dissipated. By determining the thickness of each of the reflective films 12, 22, 32, and 42 to an appropriate thickness, for example, about 10 nm, dissipation of heat can be ensured while increasing the transmittance.

Furthermore, the structure of each of the reflective films 12, 22, 32, and 42 is not limited to a single-layer structure. For example, the structure may be a stacked structure in which two layers (reflective layers) composed of a metal or a semimetal are stacked. Furthermore, the structure may be a multilayer structure including two or more layers. Accordingly, an optical design is easily performed, and a balance with thermal properties is also easily achieved. Note that a barrier layer composed of a SiN film or the like may be provided between a dielectric layer and a reflective layer.

Each of the spacer layers 51, 52, and 53 is arranged by applying a light-transmissive material having ultraviolet light sensitivity (hereinafter, ultraviolet-curable resin), which forms a multilayer structure of the optical disc recording medium, with rotation by a spin-coating method, and curing the light-transmissive material by irradiation of ultraviolet light. When recording and/or reproduction of an information signal is performed on and/or from a multilayer optical disc recording medium, the arrangement and film thicknesses of these spacers are determined for the purpose of suppressing interlayer cross-talk.

The cover layer 61 is formed for the purpose of protecting the optical disc recording medium. Recording and/or reproduction of an information signal is performed by, for example, focusing a laser beam on a recording layer for recording the information signal through the cover layer 61. As the cover layer 61, for example, an ultraviolet-curable resin, an ultraviolet-curable resin and a polycarbonate sheet, or an adhesive layer and a polycarbonate sheet can be used. In the multilayer optical disc recording medium, the cover layer 61 is set on the formation resin substrate 1 having a thickness of 1.1 mm so that the total thickness of the cover layer 61 and the multiple recording layers is 100 µm.

As in the cover layer 61, the hard coating layer 71 is used in order to protect the optical disc recording medium from mechanical shocks and scratches, and furthermore, to protect the recording and/or reproducing quality of an information signal from adhesion of fingerprints of users during handling. As the hard coating layer 71, an ultraviolet-curable resin such as an ultraviolet-curable resin in which fine silica particles are incorporated in order to improve the mechanical strength, a solvent-type ultraviolet-curable resin, or a non-solvent-type ultraviolet-curable resin can be used. The hard coating layer 71 has a thickness in the range of 1 micrometer to several micrometers so as to have a mechanical strength and to repel grease such as fingerprints.

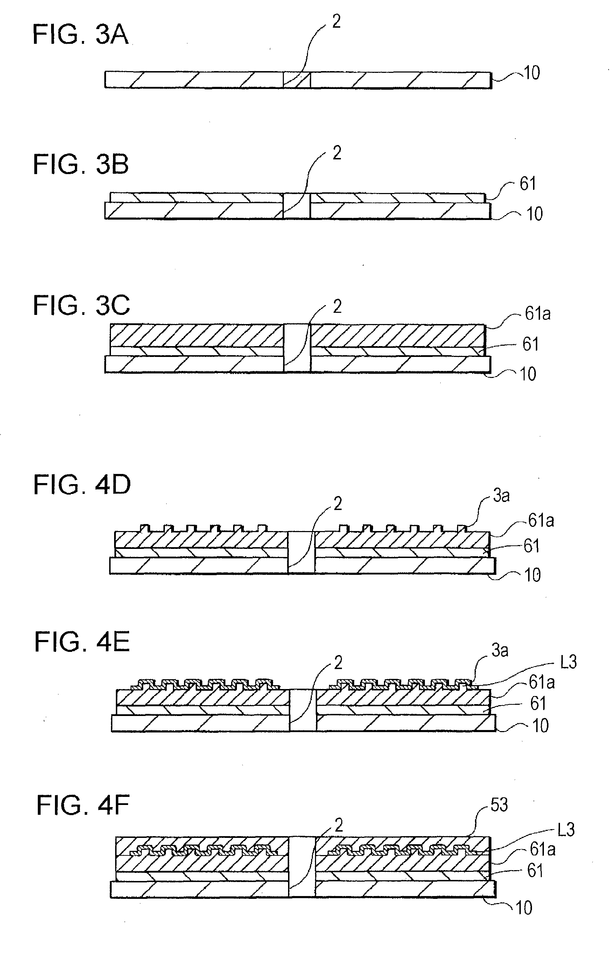

A method of producing the optical disc recording medium according to this embodiment example will be described with reference to Figs. 3 to 13.

First, as shown in Fig. 3A, a transfer substrate composed of a resin (hereinafter, transfer resin substrate) 10 is prepared. This transfer resin substrate 10 may be a substrate composed of a light-transmissive resin such as polycarbonate, ZEONOR, or ZEONEX, and is formed by, for example, injection molding. The transfer resin substrate 10 has a thickness of 0.5 mm to 1.1 mm and has a shape of a disc having a diameter φ of about 120 mm. Furthermore, a center hole 2 having a diameter φ of about 15 mm is provided at a central portion of the transfer resin substrate 10.

Subsequently, as shown in Fig. 3B, the transfer resin substrate 10 is placed in a spin-coating apparatus, and an ultraviolet-curable resin is applied onto the transfer resin substrate 10 by a spin-coating method in order to form a cover layer 61. In the spin-coating method, the transfer resin substrate 10 is placed on a rotary table (not shown) of the spin-coating apparatus. Subsequently, a desired application liquid is supplied from a dispenser onto the transfer resin substrate 10. By rotating a rotary portion at a high speed, the application liquid is uniformly spread on the transfer resin substrate 10 to form a desired film.

In this embodiment example, when the central portion of the transfer resin substrate 10 is defined as the origin point, an appropriate amount of the ultraviolet-curable resin is supplied through the dispenser to the position at a radius of 15 mm. In this step, the rotary portion of the spin-coating apparatus is rotated at a low speed of 60 rpm during the supply of the ultraviolet-curable resin. The supply of the ultraviolet-curable resin is completed after 5 to 10 seconds, and the rotation of the rotary portion is accelerated to 3,000 rpm and stopped after 5 seconds. Subsequently, the transfer resin substrate 10 onto which the ultraviolet-curable resin is applied is carried to a UV exposure section, and the transfer resin substrate 10 is irradiated with UV from the reverse surface thereof using a flash lamp. Consequently, the ultraviolet-curable resin is cured and formed into a film as the cover layer 61.

Next, as shown in Fig. 3C, in order to deposit a fourth recording layer L3, a resin layer for forming a projection-and-recess pattern having pits and pregrooves is formed on the transfer resin substrate 10. The fourth recording layer L3 is the layer having the highest light transmittance among recording layers deposited in this embodiment example.
As the resin layer for forming the projection-and-recess pattern, the cover layer 61 may be used as it is or another film of an ultraviolet-curable resin for a spacer layer may be additionally formed. In the case of the example shown in Fig. 3C, an ultraviolet-curable resin for a spacer layer is used, and a spacer layer 61a is formed on the upper surface of the cover layer 61. In order to form this spacer layer 61a, a film is formed by applying an ultraviolet-curable resin by a spin-coating method. When the central portion of the transfer resin substrate 10 is defined as the origin point, an appropriate amount of the ultraviolet-curable resin is supplied through the dispenser to the position at a radius of 15 mm. In this step, the rotary portion of the spin-coating apparatus is rotated at a low speed of, for example, 60 rpm during the supply of the ultraviolet-curable resin. The supply of the ultraviolet-curable resin is completed after, for example, 5 to 10 seconds, and the rotary portion is accelerated to 8,000 rpm and stopped after 5 seconds. Thus, the ultraviolet-curable resin is applied so as to have a desired thickness.
Note that, in the schematic cross-sectional structure shown in Fig. 3C, the thickness of the spacer layer 61a is larger than that of the cover layer 61 in the figure. However, in reality, the spacer layer 61a is formed so as to have a thickness in the range of 1 to 3 µm whereas the thickness of the cover layer 61 is about 55 µm.

Subsequently, the transfer resin substrate 10 is carried to a transfer section equipped with a nickel stamper having a desired projection-and-recess pattern. Next, in the transfer section, the nickel stamper is pressed onto the cover layer 61 or, in this embodiment example, the ultraviolet-curable resin (spacer layer 61a) formed on the cover layer 61. At the same time, the transfer resin substrate 10 is irradiated with UV from the reverse surface thereof using a flash lamp. Consequently, as shown in Fig. 4D, the spacer layer 61a having a projection-and-recess pattern 3a is formed.

Next, as shown in Fig. 4E, the transfer resin substrate 10 in which the projection-and-recess pattern 3a is provided on the spacer layer 61a is carried to a sputtering apparatus, and the fourth recording layer L3 is deposited. In this embodiment example, the fourth recording layer L3 is the layer having the highest light transmittance among recording layers deposited in this embodiment example. As shown in Fig. 2, the deposition of the fourth recording layer L3 is successively performed in a vacuum in the order of the second dielectric film 45, the recording film 44, the first dielectric film 43, and the reflective film 42. Accordingly, the fourth recording layer L3 is formed by these stacked films. Furthermore, in this sputtering method, the second dielectric film 45, the recording film 44, the first dielectric film 43, and the reflective film 42 are deposited at a desired position using a mask, and are formed, for example, in an area between a diameter of 40 mm and a diameter of 118 mm from the central portion.

Next, as shown in Fig. 4F, for the purpose of forming a projection-and-recess pattern having pits and pregrooves on a resin layer, a spacer layer 53 is formed by applying an ultraviolet-curable resin onto the fourth recording layer L3. In order to form the spacer layer 53, the ultraviolet-curable resin is applied by a spin-coating method to form a film. When the central portion of the transfer resin substrate 10 is defined as the origin point, an appropriate amount of the ultraviolet-curable resin is supplied through the dispenser to the position at a radius of the transfer resin substrate 10 of 15 mm. In this step, the rotary portion of the spin-coating apparatus is rotated at a low speed of, for example, 60 rpm during the supply of the ultraviolet-curable resin. The supply of the ultraviolet-curable resin is completed after, for example, 5 to 10 seconds, and the rotary portion is accelerated to 4,000 rpm and stopped after 5 seconds. Thus, the ultraviolet-curable resin is applied so as to have a desired thickness.

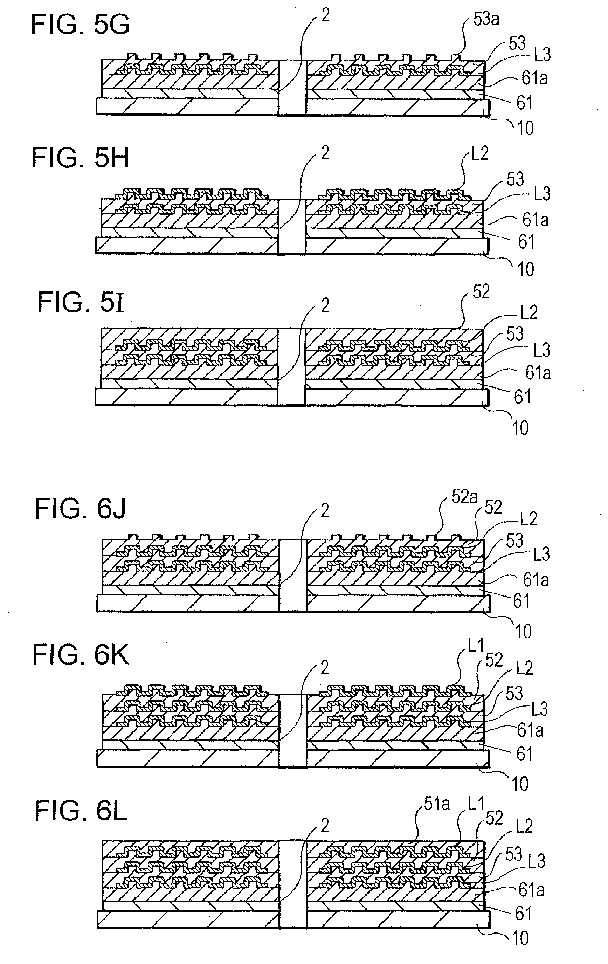

Next, as shown in Fig. 5G, the transfer resin substrate 10 having the spacer layer 53 composed of the ultraviolet-curable resin thereon is carried to the transfer section equipped with the nickel stamper having the desired projection-and-recess pattern. Next, in this section, a projection-and-recess pattern 53a is formed on the spacer layer 53. In this step, the transfer resin substrate 10 is irradiated with UV from the reverse surface thereof using a flash lamp, while pressing the nickel stamper at the same time, thus forming the spacer layer 53 having the projection-and-recess pattern 53a. In this embodiment example, in the previous step, the fourth recording layer L3 has been formed at a position closer to the light-irradiation side than the spacer layer 53. However, the fourth recording layer L3 transmits light of the flash lamp to the spacer layer 53. Therefore, the desired projection-and-recess pattern 53a can be formed on the spacer layer 53 even when UV irradiation is performed from the reverse surface side of the transfer resin substrate 10.

Next, as shown in Fig. 5H, the transfer resin substrate 10 in which the projection-and-recess pattern 53a is provided on the spacer layer 53 is carried to the sputtering apparatus, and a third recording layer L2 is deposited. In this embodiment example, the third recording layer L2 is the layer having the second highest light transmittance among the recording layers deposited in this embodiment example. The deposition of the third recording layer L2 is successively performed in a vacuum in the order of the second dielectric film 35, the recording film 34, the first dielectric film 33, and the reflective film 32. Accordingly, the third recording layer L2 is formed by these stacked films. Furthermore, in this sputtering method, the second dielectric film 35, the recording film 34, the first dielectric film 33, and the reflective film 32 are deposited at a desired position using a mask, and are formed, for example, in an area between a diameter of 40 mm and a diameter of 118 mm from the central portion.

Next, as shown in Fig. 5I, for the purpose of forming a projection-and-recess pattern having pits and pregrooves, a spacer layer 52 is formed by applying an ultraviolet-curable resin onto the third recording layer L2 of the transfer resin substrate 10. This spacer layer 52 is formed by applying the ultraviolet-curable resin by a spin-coating method. When the central portion of the transfer resin substrate 10 is defined as the origin point, an appropriate amount of the ultraviolet-curable resin is supplied through the dispenser to the position at a radius of 15 mm. In this step, the rotary portion of the spin-coating apparatus is rotated at a low speed of, for example, 60 rpm during the supply of the ultraviolet-curable resin. The supply is completed after 5 to 10 seconds, and the rotary portion is accelerated to 5,000 rpm and stopped after 5 seconds. Thus, the ultraviolet-curable resin is applied so as to have a desired thickness.

Next, as shown in Fig. 6J, the transfer resin substrate 10 is carried to the transfer section equipped with the nickel stamper having the projection-and-recess pattern having pits and pregrooves, and a projection-and-recess pattern 52a is formed on the spacer layer 52. Also in this step, the transfer resin substrate 10 is irradiated with UV from the reverse surface thereof using a flash lamp, while pressing the nickel stamper at the same time. Accordingly, the ultraviolet-curable resin is cured by the UV irradiation, thus forming the spacer layer 52 having the projection-and-recess pattern 52a. In this embodiment example, in the previous steps, the fourth recording layer L3 and the third recording layer L2 have been formed at positions closer to the light-irradiation side than the spacer layer 52.
However, the fourth recording layer L3 and the third recording layer L2 transmit light of the flash lamp to the spacer layer 52. Therefore, the desired projection-and-recess pattern 52a can be formed on the spacer layer 52 even when ultraviolet irradiation is performed from the reverse surface side of the transfer resin substrate 10.

Next, as shown in Fig. 6K, the transfer resin substrate 10 in which the projection-and-recess pattern 52a is provided on the spacer layer 52 is carried to the sputtering apparatus, and a second recording layer L1 is deposited. In this embodiment example, the second recording layer L1 is the layer having the third highest light transmittance among the recording layers deposited in this embodiment example. The deposition of the second recording layer L1 is successively performed in a vacuum in the order of the second dielectric film 25, the recording film 24, the first dielectric film 23, and the reflective film 22. Accordingly, the second recording layer L1 is formed by these stacked films. Furthermore, in this sputtering method, the second dielectric film 25, the recording film 24, the first dielectric film 23, and the reflective film 22 are deposited at a desired position using a mask, and are formed, for example, in an area between a diameter of 40 mm and a diameter of 118 mm from the central portion.

Next, as shown in Fig. 6L, for the purpose of bonding with a formation resin substrate 1, a spacer layer 51a is formed on the second recording layer L1 so as to have a thickness of about half a predetermined thickness. An ultraviolet-curable resin to be formed into this spacer layer 51a is applied onto the second recording layer L1 disposed on the transfer resin substrate 10 by a spin-coating method to form a film. In this embodiment example, when the central portion of the transfer resin substrate 10 is defined as the origin point, an appropriate amount of the ultraviolet-curable resin is supplied through the dispenser to the position at a radius of the transfer resin substrate 10 of 15 mm. In this step, in this embodiment example, for example, the rotary portion of the spin-coating apparatus is rotated at a low speed of, for example, 60 rpm during the supply of the ultraviolet-curable resin. The supply of the ultraviolet-curable resin is then completed after, for example, 5 to 10 seconds, and the rotary portion is accelerated to 8,000 rpm and stopped after 5 seconds. Thus, the spacer layer 51a composed of the ultraviolet-curable resin is applied so as to have a desired thickness.

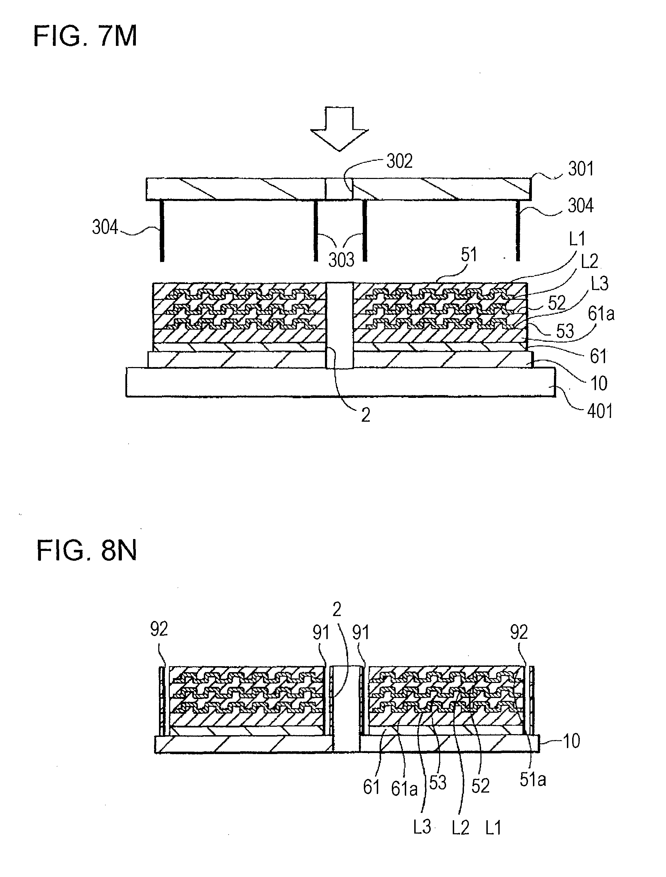

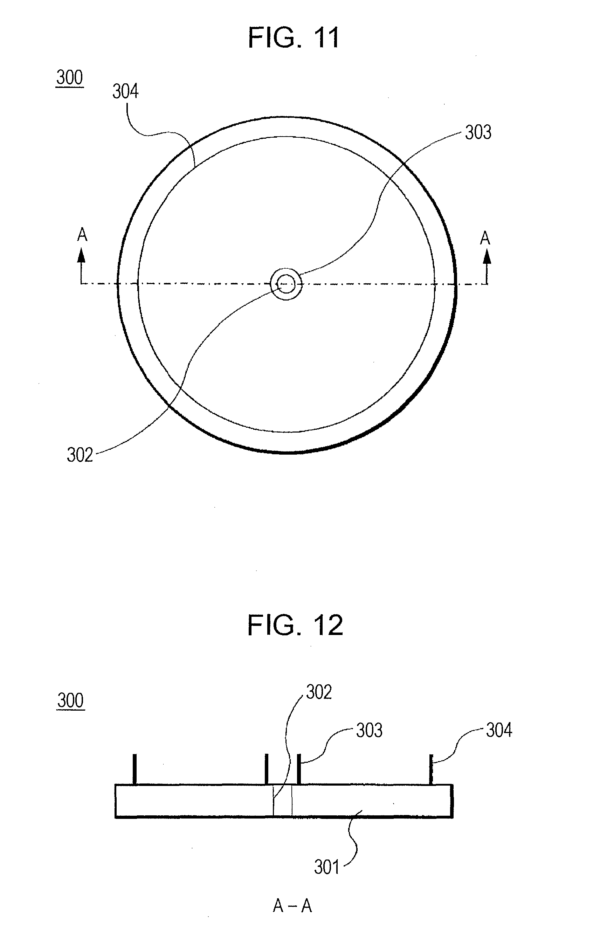

Next, as shown in Fig. 7M, cut-out portions for detachment transfer, which are necessary in a subsequent step, are formed using a pressing blade 300 on the multilayer film formed on the transfer resin substrate 10 as described above. Fig. 11 shows a schematic planar structure of the pressing blade 300, and Fig. 12 shows a cross-sectional structure taken along line A-A of Fig. 11. As shown in Figs. 11 and 12, the pressing blade 300 is formed by embedding an inner-diameter blade 303 and an outer-diameter blade 304 in a disc-shaped base 301. Furthermore, an opening 302 is provided at a central portion of the disc-shaped base 301 and is used to obtain an alignment with the center hole 2 of the transfer resin substrate 10. Each of the inner-diameter blade 303 and the outer-diameter blade 304 is composed of a hardened steel, and an end face thereof forms a knife edge. In addition, the base 301 is composed of, for example, a metal or a plastic.
In this embodiment example, the cut-out portions are formed at positions other than inner circumferential and outer circumferential formats of the optical disc recording medium and areas thereof.

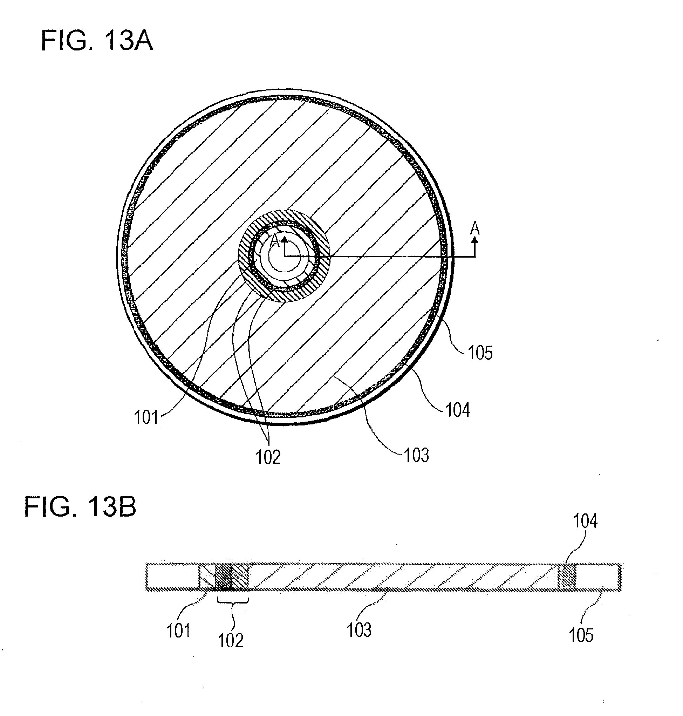

Figs. 13A and 13B show a layout of, for example, a write-once, rewritable, or reproduction-only recording layer of a BD. Fig. 13A shows a schematic planar structure of the BD, and Fig. 13B shows a cross-sectional structure taken along line A-A of Fig. 13A.
The structure of an optical disc recording medium is broadly divided into a BCA (burst cutting area) 101, a lead-in zone 102, a data area 103, a lead-out zone 104, and an outer-zone 105. In an optical disc recording medium, such as a BD, including multiple recording layers, the structure of the recording layers other than the first recording layer has a similar layout except for the BCA 101.

In this embodiment example, the inner-diameter blade 303 of the pressing blade 300 is constituted inside the BCA 101, which is the innermost circumferential portion in the optical disc recording medium, and the outer-diameter blade 304 is formed outside the lead-out zone 104, which is the outermost circumferential portion in the optical disc recording medium.

In this embodiment example, as shown in Fig. 7M, the pressing blade 300 is attached to a simple pressing machine, and the transfer resin substrate 10 is fixed to a press stage 401. Next, alignment is determined using, as a reference, the center hole 2 of the optical disc recording medium including multiple recording layers and produced by the steps described above, and the pressing blade 300 is pressed at a predetermined pressure to a predetermined depth. Accordingly, as shown in Fig. 8N, cut-out portions 91 and 92 for detachment transfer are formed. The inner circumferential cut-out portion 91 is formed by the inner-diameter blade 303, and the outer circumferential cut-out portion 92 is formed by the outer-diameter blade 304. In addition, the cut-out portions 91 and 92 are formed to a depth reaching at least the transfer resin substrate 10.

In this embodiment example, the innermost circumferential cut-out portion 91 is formed in an area within a diameter φ in the range of 20 mm to 40 mm, more preferably within a diameter φ in the range of 24 mm to 35 mm when the central portion of the transfer resin substrate 10 is defined as the origin point. Similarly, the outermost circumferential cut-out portion 92 is preferably formed in an area within a diameter φ in the range of 119 mm to 119.5 mm when the central portion of the transfer resin substrate 10 is defined as the origin point.

In addition, it is important that the innermost circumferential cut-out portion 91 and the outermost circumferential cut-out portion 92 not include respective films such as the second recording layer L1 to the fourth recording layer L3 of the optical disc recording medium on their cross sections. That is, a phase-change recording material constituting the recording films of the optical disc recording medium is not exposed at the cross sections of the cut-out portions 91 and 92, but continuously coated with the ultraviolet-curable resin serving as a structure. Accordingly, even if the optical disc recording medium is exposed to a high-temperature, high-humidity environment or kept in a low-temperature environment, good recording characteristics are maintained for a long period of time. In this embodiment example, the second recording layer L1 to the fourth recording layer L3 are formed in an area between a diameter of 40 mm and a diameter of 118 mm. In addition, the cut-out portion 91 is formed outside a diameter of 118 mm, and the cut-out portion 92 is formed inside a diameter of 40 mm. Consequently, the second recording layer L1 to the fourth recording layer L3 are not exposed at the cross sections of the cut-out portions 91 and 92.

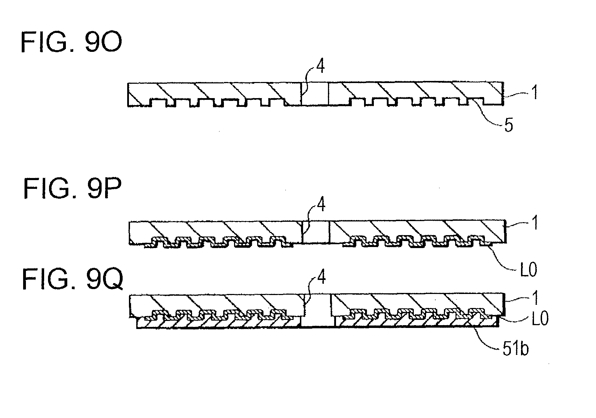

Next, as shown in Fig. 9O, a formation resin substrate 1 in which a projection-and-recess pattern 5 is provided and a center hole 4 having a diameter of about 15 mm is formed at a central portion by injection molding is prepared. It is required that the direction of this projection-and-recess pattern 5 be the same as the direction of the projection-and-recess patterns of the second recording layer L1 to the fourth recording layer L3, which will be bonded later. The formation resin substrate 1 is preferably composed of a moldable material having a high light transmittance and a low water-absorbing property, such as polycarbonate, ZEONOR, or ZEONEX, with a thickness of 1.1 mm and a diameter φ of 120 mm.

Next, as shown in Fig. 9P, the formation resin substrate 1 in which the projection-and-recess pattern 5 is provided is carried to the sputtering apparatus, and a first recording layer L0 is deposited. The deposition of the first recording layer L0 is successively performed in a vacuum in the order of the second dielectric film 15, the recording film 14, the first dielectric film 13, and the reflective film 12. Accordingly, the first recording layer L0 including the stacked films is formed. In this embodiment example, by forming the first recording layer L0 on the formation resin substrate 1 side, a step of forming the projection-and-recess pattern 5 for the first recording layer L0 on the transfer resin substrate 10 side can be omitted.

Next, as shown in Fig. 9Q, for the purpose of bonding to the formation resin substrate 1, a spacer layer 51b is formed on the first recording layer L0 so as to have a thickness of about half the predetermined thickness. This spacer layer 51b is formed by applying an ultraviolet-curable resin onto the first recording layer L0 by a spin-coating method. In this embodiment example, in the spin-coating method, when the central portion of the formation resin substrate 1 is defined as the origin point, an appropriate amount of the ultraviolet-curable resin is supplied through the dispenser to the position at a radius of the formation resin substrate 1 of 15 mm. In this step, the rotary portion of the spin-coating apparatus is rotated at a low speed of 60 rpm during the supply of the ultraviolet-curable resin. The supply of the ultraviolet-curable resin is then completed after 5 to 10 seconds, and the rotary portion is accelerated to 8,000 rpm and stopped after 5 seconds. Thus, the spacer layer 51b applied onto the first recording layer L0 so as to have a desired thickness, for example, a thickness of several micrometers is formed.

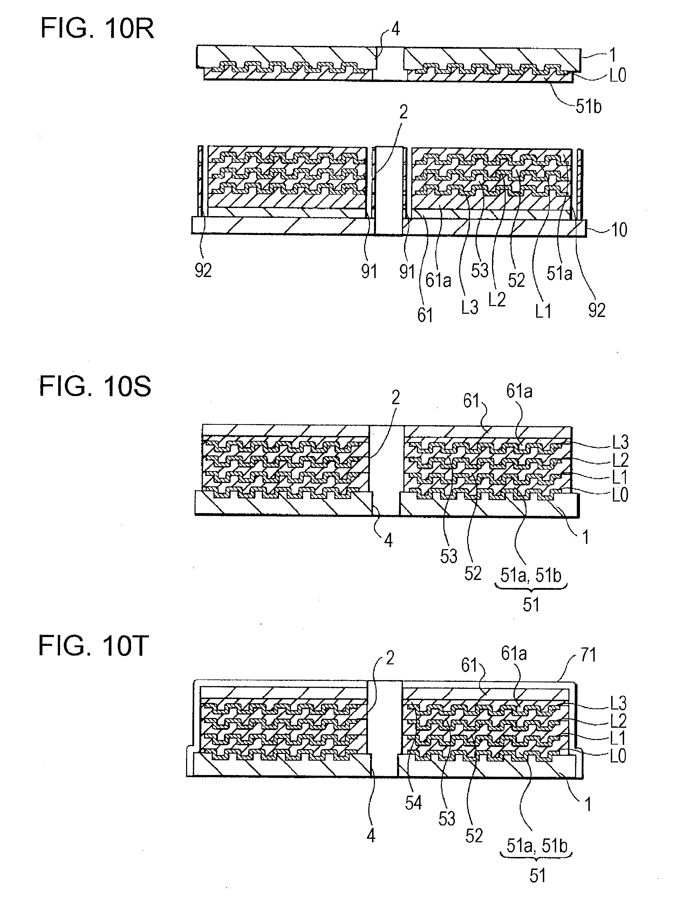

Next, as shown in Fig. 10R, the formation resin substrate 1, which is formed in the steps shown in Figs. 9O to 9Q and which includes the first recording layer L0 and the spacer layer 51b, is bonded on the spacer layer 51a of the transfer resin substrate 10, which is formed in the steps shown in Figs. 3A to 8N and which has the cut-out portions 91 and 92 for detachment transfer, under pressure using the center holes 2 and 4 as references. In this stage, the ultraviolet-curable resin constituting the spacer layers 51a and 51b is in an uncured state. Subsequently, the transfer resin substrate 10 side is irradiated with ultraviolet light to perform bonding by curing. Next, the transfer resin substrate 10 is detached to transfer the stacked films including multiple recording layers to the formation resin substrate 1 side. Meanwhile, in this embodiment example, in the previous steps, the fourth recording layer L3, the third recording layer L2, and the second recording layer L1 have been formed on the light-irradiation side. The second recording layer L1 to the fourth recording layer L3 are formed on the transfer resin substrate 10, which is disposed on the light-irradiation side, in descending order of the light transmittance. Accordingly, the fourth recording layer L3, the third recording layer L2, and the second recording layer L1 transmit light of a flash lamp to the spacer layers 51a and 51b of bonding portions. Therefore, the spacer layers 51a and 51b are bonded by curing even when UV irradiation is performed from the transfer resin substrate 10 side. Consequently, as shown in Fig. 10S, the stacked films formed on the transfer resin substrate 10 are transferred onto the formation resin substrate 1.

Subsequently, as shown in Fig. 10T, a hard coating material containing an ultraviolet-curable resin as a main component is applied by a spin-coating method onto the multilayer optical disc recording medium disposed on the formation resin substrate 1, and is then cured by being irradiated with ultraviolet light. In this case, this step is strictly controlled so that the hard coating material is not applied onto the portion of the center hole 2.
Accordingly, end faces for detachment of the multilayer film including the first recording layer L0 to the fourth recording layer L3 and the cover layer 61 are protected by a cured hard coating layer 71. Thus, the production of the multilayer optical disc recording medium is completed in this step.

Meanwhile, in producing a multilayer optical disc recording medium, a light intensity of a reproduction signal output from the top surface of the reading side is required to be several percent of incident light. Furthermore, as the number of layers increases, it is required that the reflectivity be increased in order to increase the strength of signal output from the recording layer disposed at the bottom when viewed from the reading side. In addition, the respective layers are designed so that the amounts of light reaching the top surface of the reading side are substantially the same as each other. Accordingly, as in the conventional method, in a method in which a layer having a low light transmittance, for example, the first recording layer L0 is stacked first, when a projection-and-recess pattern is transferred with a nickel stamper and curing is performed by irradiation of ultraviolet light from the reverse surface side of the transfer resin substrate, the irradiation of ultraviolet light is performed from the low-light transmittance side. Therefore, in the case where a nickel stamper is used in the conventional method, the efficiency is low because of the low light transmittance.

In this embodiment example, layers are formed on the transfer resin substrate 10 from the high-light transmittance recording layer side, i.e., from the fourth recording layer L3 side in this embodiment example, and thus curing can be performed efficiently with ultraviolet light even from the transfer resin substrate 10 side. Accordingly, since light irradiation can be efficiently performed from the transfer resin substrate 10 side, a nickel stamper can be used. Thus, the nickel stamper, which can be repeatedly used, can be used instead of a conventionally used transparent resin stamper, which can be used only once, and therefore, the cost can be reduced in the stamper process.
In addition, in this embodiment example, for example, a projection-and-recess pattern can be efficiently transferred to an ultraviolet-curable resin layer by using the nickel stamper, and thus the degree of freedom of the design of the recording layers is large and a process consistency is good. Furthermore, since the recording layers are formed so as not to be exposed at the cross sections of the cut-out portions, a high-quality optical disc recording medium resistant to change over time can be produced.

This embodiment example is configured so that the first recording layer L0 is formed on the formation resin substrate 1, and the formation resin substrate 1 is then bonded to the transfer resin substrate 10 on which the second recording layer L1 to the fourth recording layer L3 are formed. This embodiment example is not limited thereto and may be an example in which the first recording layer L0 is formed on the transfer resin substrate 10 side subsequent to the formation of the second recording layer L1. In this case, only a spacer layer for transfer is formed on the formation resin substrate 1, and the stacked films on the transfer resin substrate 10, which includes the first recording layer L0 to the fourth recording layer L4, are transferred to the formation resin substrate 1.

### [Second Embodiment]

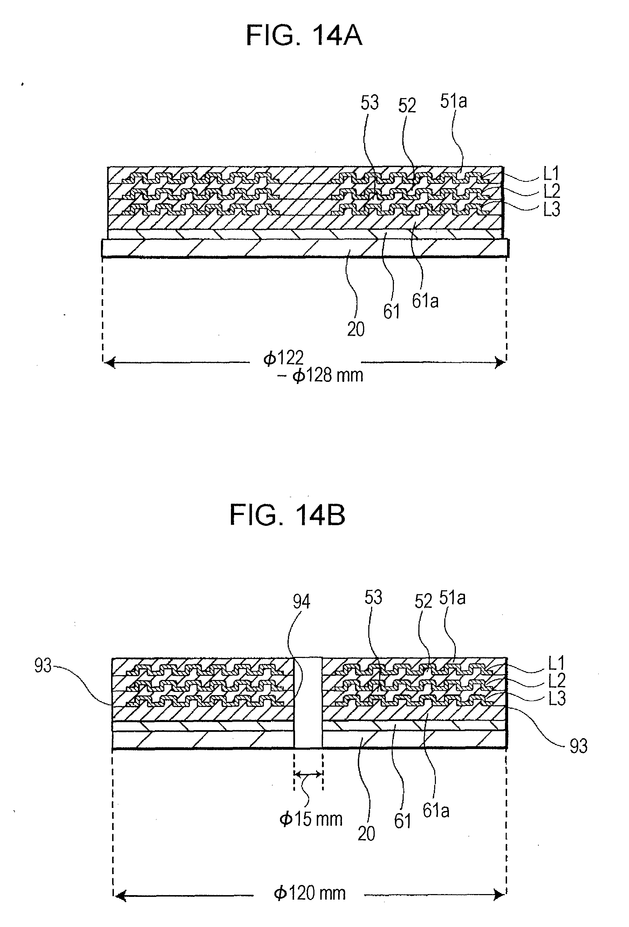

Fig. 14 shows a shape of a four-layer structured optical disc recording medium according to a second embodiment of the present invention during a process. The optical disc recording medium formed in this embodiment example is similar to the optical disc recording medium shown in Figs. 1 and 2, and thus an overlapping description is omitted. In this embodiment example, a transfer resin substrate 20 has an outer diameter of 122 to 128 mm, preferably 124 mm to 126 mm and a thickness of 0.1 mm to 1.1 mm, preferably 0.4 mm to 0.6 mm, and has a disc shape without a center hole. This embodiment example is the same as the first embodiment except that the transfer resin substrate 20 does not have a center hole and is formed by a method similar to that in the first embodiment. Fig. 14A is a process view of a stage corresponding to Fig. 4F in the production process in the first embodiment. In Fig. 14A, parts corresponding to those in Fig. 4F are assigned the same reference numerals and an overlapping description thereof is omitted.

Hitherto, in the case where a first recording layer including a reflective film, a dielectric film, a recording film etc. is deposited on a formation resin substrate having a center hole (through-hole) of about 15 mm at a central portion thereof, and an ultraviolet-curable resin to be formed into a spacer layer is then applied thereto by a spin-coating method, it has been impossible to dispose the ultraviolet-curable resin to be applied to the central portion. Therefore, for example, the following means has been employed: A processed metal cap serving as means for filling the center hole at the central portion is attached, and the ultraviolet-curable resin is then supplied at a position substantially equivalent to the central portion on the substrate so that the thickness of an applied film is uniform.

In contrast, in this embodiment example, a process similar to the first embodiment of the present invention can be performed using the transfer resin substrate 20 not having a center hole at the central portion while holding an invalid portion of a recording medium having a diameter φ exceeding 120 mm. This transfer resin substrate 20 not having a center hole is advantageous in that, also in the formation of a cover layer 61 and the formation of spacer layers 51a, 52, 53, and 61a, the ultraviolet-curable resin can be applied onto the central portion of the transfer resin substrate 20, and the distribution of the film thickness by a spin-coating method is markedly improved.

In general, when an ultraviolet-curable resin is applied by a spin-coating method, the thickness of an applied film is determined by the viscosity of the resin, the number of revolutions during spin-coating, a coefficient of friction at an interface of a recording layer that contacts the resin, and other factors. A method is also known in which far-infrared radiation is moved at a predetermined speed over a transfer resin substrate 20 during rotation for application in order to obtain a more uniform thickness, but the control thereof is complicated. Furthermore, also by such a method, to maintain the physical shape of an outermost circumferential portion in a good state requires a lot of efforts.

In this embodiment example, multiple layers of an optical disc recording medium are formed by steps similar to those in the first embodiment using the transfer resin substrate 20 having a diameter φ of larger than 120 mm, for example, a substrate having a diameter φ of 124 mm. Subsequently, as shown in Fig. 14B, by cutting an opening of a center hole 94 at the central portion and the invalid portion at the outer circumferential portion through a cutting process of the transfer resin substrate 20, that is, through the steps shown in Figs. 7 and 8, an area where the distribution of the thicknesses of recording films is good can be stably ensured.
Also in this embodiment example, subsequently, in steps similar to the process shown in Figs. 9 and 10 in the first embodiment, the production of the optical disc recording medium including good four recording layers is completed through a transfer to a formation resin substrate 1 and an application of a hard coating material.

In addition, in this embodiment example, the same advantages as those of the first embodiment can be obtained.

The present invention has been described as a method of producing a four-layer optical disc recording medium in the first embodiment and the second embodiment, but it is obvious that the present invention is also effective when the number of recording layers is three or five or more.

Furthermore, the present invention is not limited to a write-once recording medium, and can be applied also to a method of producing a rewritable or read-only optical disc recording medium.

### Industrial Applicability

In adopting a nickel stamper, which can be repeatedly used several tens of thousands of times or more, in place of the use of a transparent stamper, for a process of producing a multilayer optical disc recording medium of the present invention, steps of performing ultraviolet irradiation and curing, the steps being performed in descending order of the transmittance of each recording layer, are proposed as a production method in which ultraviolet irradiation from the reverse surface of a substrate can be realized, and the process can be used as a process for which the cost can be significantly reduced because the nickel stamper can be used for a long time in the steps.

### Explanation of Reference Numerals

1 ·· formation resin substrate
2, 4 ·· center hole
10 ·· transfer resin substrate
12, 22, 32, 42 ·· reflective film
13, 23, 33, 43 ·· first dielectric film
14, 24, 34, 44 ·· recording film
15, 25, 35, 45 ·· second dielectric film
61 ·· cover layer
71 ·· hard coating layer
91, 92 ·· cut-out portion
51, 52, 53, 61a ·· spacer layer

## Claims

1. A method of producing an optical disc recording medium comprising the steps of:
preparing a transfer substrate;
forming an ultraviolet-curable resin layer on a surface of the transfer substrate;
forming a projection-and-recess pattern on the ultraviolet-curable resin layer by pressing a nickel stamper having a desired projection-and-recess pattern onto the ultraviolet-curable resin layer under pressure while performing ultraviolet irradiation from the reverse surface side of the transfer substrate, and forming a recording layer on the ultraviolet-curable resin layer on which the projection-and-recess pattern is formed;
forming an ultraviolet-curable resin layer on the recording layer, forming a projection-and-recess pattern on the ultraviolet-curable resin layer by pressing the nickel stamper having the desired projection-and-recess pattern onto the ultraviolet-curable resin layer under pressure while performing ultraviolet irradiation from the transfer substrate side, and forming another recording layer on the ultraviolet-curable resin layer on which the projection-and-recess patter is formed, the other recording layer having a light transmittance lower than the light transmittance of the recording layer formed in the previous step; and
forming stacked films including a plurality of recording layers by repeating the step of forming another recording layer a plurality of times according to need.

2. The method of producing an optical disc recording medium according to Claim 1, further comprising the steps of:
preparing a formation substrate;
transferring the stacked films including the plurality of recording layers and formed on the transfer substrate to the formation substrate; and
forming a hard coating layer that covers the stacked films on the formation substrate to which the stacked films are transferred.

3. The method of producing an optical disc recording medium according to Claim 2, further comprising a step of:
before the step of transferring the stacked films to the formation substrate, forming cut-out portions for detachment in an inner circumferential portion and an outer circumferential portion of the stacked films on the transfer substrate so that the cross sections of the plurality of recording layers are not exposed from the stacked films on the transfer substrate.

4. The method of producing an optical disc recording medium according to Claim 1,
wherein a center hole used for centering in the step of pressing the nickel stamper under pressure is formed in the transfer substrate.

5. The method of producing an optical disc recording medium according to Claim 4,
wherein the center hole is used for positioning in the step of forming the cut-out portions.

6. The method of producing an optical disc recording medium according to Claim 1, further comprising a step of:
after the step of preparing the formation substrate,
forming one recording layer on the formation substrate.
